# EUROPEAN PATENT APPLICATION

(11) **EP 3 958 039 A1**
(43) Date of publication of application: **23.02.2022**
(21) Application number: 20275132.7
(22) Date of filing: 20.08.2020
(51) Int. Cl.: G02B 27/01

(54) **IMPROVEMENTS IN OR RELATING TO WEARABLE OPTICAL DEVICES**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A wearable optics device including an adjustment mechanism supportable on a frame adapted to be worn by a user; one or more waveguides in a prealigned position relative to the adjustment mechanism; and an optical element moveably attached to the adjustment mechanism to enable the optical element to be moved based on a user preference and to provide an exit pupil for the wearable optics device.

## Description

The present invention relates to improvements in or relating to wearable optical devices, particularly but not exclusively to adjustable wearable devices.

Wearable optical devices are common in many walks of life. These include automotive applications, aviation, military applications, engineering, medicine, gaming and any general application for viewing media and the like. Wearable optical devices are often referred to as head mounted displays (HMD) or head worn displays (HWD); the expression 'HMD' is used herein to represent HMDs, HWDs and any other wearable optical devices such as, for example, goggles, glasses and hand held devices with viewing capabilities. Most HMD include two eye pieces, one for each eye.

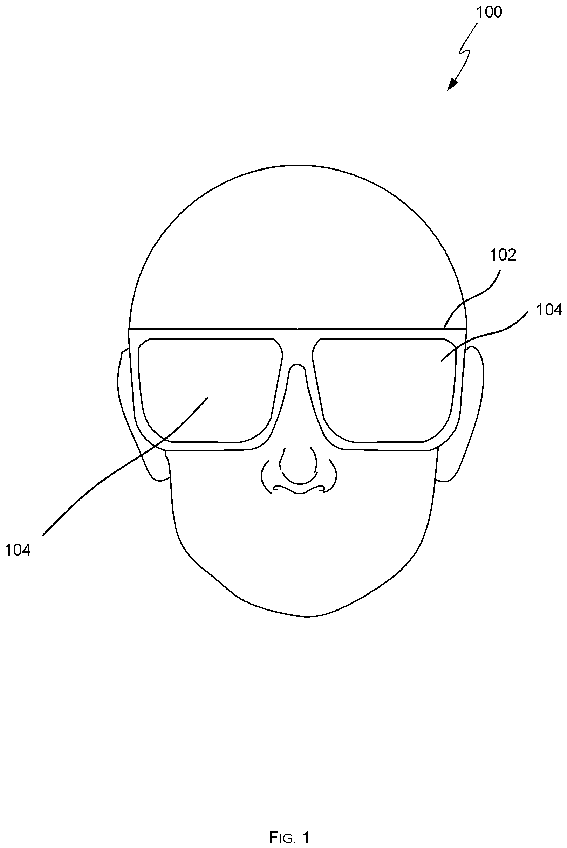

An example HMD 100 is illustrated in Figure 1. HMDs, such as HMD 100, are wearable by a user by means of an appropriate support 102. The support includes one or more optical elements 104 which can be viewed by one or both eyes of the user. Although not shown in detail, the optical elements 104 include a substantially transparent display medium. The user is able to view the exterior environment through the optical elements 104. The user is also able to view images relayed to the eye of the user in use via the HMD.

In conventional systems, images are relayed to the eye of the user in use using lens trains or folded optical designs. Lens trains or folded optical designs are incorporated into the HMD 100. Traditionally, lens trains or folded optical designs are incorporated within the support 102 of the HMD 100.

Traditional optical lens trains are linear and non-folded for simplicity. Multiple elements are usually used to achieve the performance required. For this reason, they are not particularly suitable for use in modern HMDs that are required to be compact, lightweight, and optimised for anthropometric data.

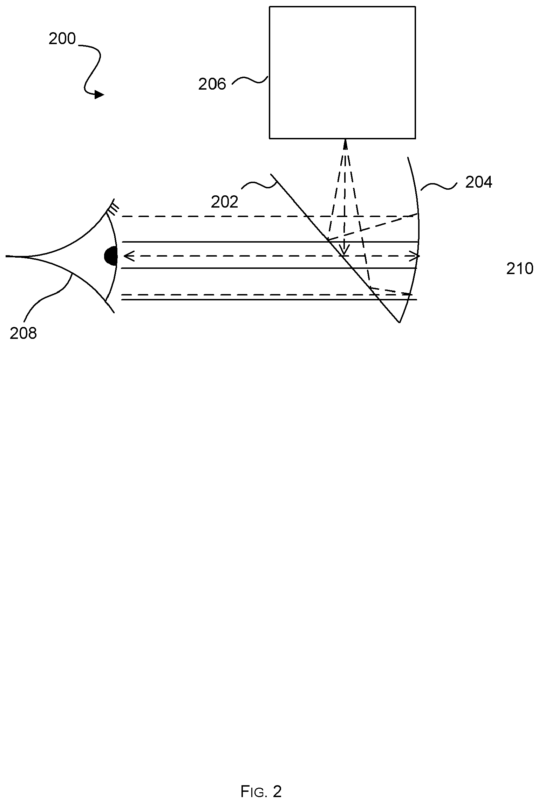

Traditional folded optical designs can be more compact, but can also introduce light loss mechanisms, reducing system efficiency. One of the simplest folded optical designs consists of an optical arrangement 200 as shown in Figure 2.

The optical arrangement 200 comprises a beamsplitter 202 and a spherical combiner 204. In use, images are directed from a display source 206 or relay lens onto the beamsplitter 202. The beamsplitter 202 partially reflects the images onto the concave surface of the spherical combiner 204. The spherical combiner 204 reflects a collimated exit pupil through the beamsplitter 202 towards the user's eye 208.

HMDs are used for many applications as indicated above, however there is a continual problem encountered in their use. This is that they tend suffer from alignment problems with respect to aligning the viewable output to the human eye. This makes viewing less comfortable or more difficult than would be desired. When designing an HMD, anthropometric data (relating to skull dimensions and body proportions) are taken into consideration. This helps with the viewing comfort but only to a limited extent. One main problem is that users each have a different interpupillary distance (IPD). As a result, the ideal positions of the eyepieces from one user to the next would be different. Achieving a stable means of adjusting the IPD for individual users has proved difficult.

In order to accommodate different IPDs a number of proposals have been made. For example, use of a large eye box enables a greater number of IPDs to be accommodated. However, this leads to a necessity to create a large exit pupil and a bigger optical system adding weight to the HMD, which is undesirable. In addition, luminance and optical performance can be negatively impacted by an increased size exit pupil.

Some HMD/HWD's utilise IPD adjustment to move the optical system about a 3D volume to align the exit pupil to a user's eye. One issue in moving the whole optical system, especially in a wearable/smaller form factor system, is compacting the mechanics to allow for the movement and maintaining alignment both between the eye and the optics, and in a binocular system alignment between two binocular optics. Introducing such mechanics also adds mass, adds complexity and introduces additional points of failure. However, adjustment may allow for a smaller optical system as the system exit pupil can be reduced due to the fact it can be moved around in space to create an eyebox. Within a fixed frame waveguide display it is preferable to leave the waveguides in situ once they have been built into a unit, specifically with a binocular system it is preferable to leave the two waveguides in situ and aligned binocularly such that they are aligned angularly and positionally with respect to the nominal design eye. Any movement of the optics can lead to misalignment and can cause eyestrain to the user with only very minor optical changes. Therefore, IPD adjustment mechanisms become difficult to implement as the waveguides (the primary elements that generate the eyebox of the HMD/HWD) are fixed in place and thus immovable.

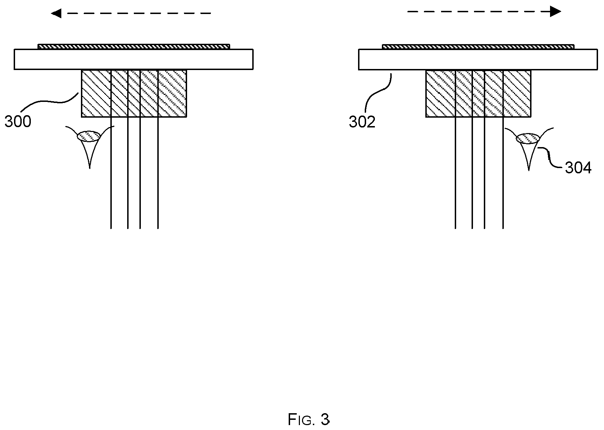

Figure 3 is an illustration showing the problem regarding differing IPDs. The figure shows the eye 304 of the user which has wide IPD. Collimator optics 300 are in a nominal position that does not align the waveguide output 304600b to this IPD position. As a result, the user cannot see display. The problem can manifest itself with other IPD differences such as a narrow IPD, different level of the eyes, etc.

Accordingly, one object of the present invention is to overcome the problems of existing HMDs.

A further object is to provide a HMD or the like in which different IPDs can be accommodated in an adaptable system which is lightweight and does not suffered from the disadvantages of known systems.

### SUMMARY

According to an aspect of the present invention there is provided a wearable optics device configured to support one or more waveguides in a pre-aligned position relative to the optical device, the optics device including: an adjustment mechanism supportable on a frame adapted to be worn by a user; an optical element moveably attached to the adjustment mechanism to enable the optical element to be moved based on a user preference and to provide an exit pupil for the wearable optics device.

Preferably, one or more waveguides in the pre-aligned position relative to the adjustment mechanism of the optics device.

Preferably, the one or more waveguides comprise two sections, one for each eye.

Preferably, the waveguide is larger than the input of the optical element.

Preferably, the optical element comprises two optical elements one for each eye of the user.

Preferably, further comprising a control system providing optical compensation to the optical element caused by the movement thereof.

Preferably, the optical element is a collimating element.

Preferably, the collimating element includes a display.

Preferably, the optical element is adapted to be move in a horizontal direction to adapt to interpupillary distance of the user.

Preferably, the optical element is adapted to be angularly displaceable to create a wider field of view for display.

Preferably, the adjustment mechanism comprises a slider on which the optical element is moveably attached.

Preferably, the adjustment mechanism comprises a tilting mechanism for changing the angular position of the optical element.

Preferably, the optical element includes at least one of an active optical element and an inactive optical element.

Preferably, the wearable optics device further comprising at least one of a frame; side arms and supports for goggles or glasses; a helmet or visor; a headband; a neck or shoulder worn support; and a headset.

Preferably, the wearable optics device is in the form of a head mounted display or a head worn display.

According to an further aspect of the present invention there is provided an optical element for use with the wearable optics device of the first aspect.

According to an still further aspect of the present invention there is provided method of adjusting an image on a wearable optics device comprising: determining the position of each of a left- and right-hand collimating element of the wearable optical device; compare the position with calibration data associated with a user of the wearable optics device; determine adjustments to be made based on the comparison; adjust the positions of the left- and right-hand collimating element based on a comparison to provide an exit pupil for the wearable optics device.

According to an aspect of the present invention there is provided an optics device configured to support one or more waveguides in a pre-aligned position relative to the optical device, the optics device including: an adjustment mechanism adapted to support a moveable optical element; wherein the moveable optical element is adapted to move relative to a nominal position based on a user preference and wherein the movement provides an exit pupil for the optics device adapted to the user preferences.

### DESCRIPTION OF THE DRAWINGS

Figure 1 is a diagram showing a representation of a head-mounted display.
Figure 2 is a diagram showing a cross-sectional diagram of a conventional optical arrangement.
Figure 3 is a diagram showing the problem associated with differing IPDs.
Figure 4 is a diagram showing a cross-sectional diagram of a folded optical arrangement, according to an embodiment of the present invention.
Figure 5 is a schematic diagram of a binocular system comprising two collimating elements, according to an embodiment of the invention.
Figure 6a to 6c are diagrams showing a first example of a binocular system comprising two collimating elements, according to an embodiment of the present invention.
Figure 7 is diagram showing a second example of a binocular system comprising two collimating elements, according to an embodiment of the present invention.
Figure 8a to 8c are diagrams showing different positions for the collimating elements for different users, according to an embodiment of the present invention.
Figure 9 is a diagram showing a slab configuration of the elements of the optics device, according to an embodiment of the present invention.
Figure 10 is a flow chart showing the steps for adjusting the setting of the optical device, according to an embodiment of the present invention.

### DESCRIPTION OF THE INVENTION

In general, the present invention relates to improvement in or relating to wearable optics devices such as HMDs where the problems associated with variable IPD of different users are addressed.

The present invention relates to a novel technique for providing an adjustable, modular HMD or associated kit of parts in which the positions of the optics in an HMD can be varied to suit the IPD and other anthropometric characteristics of each user.

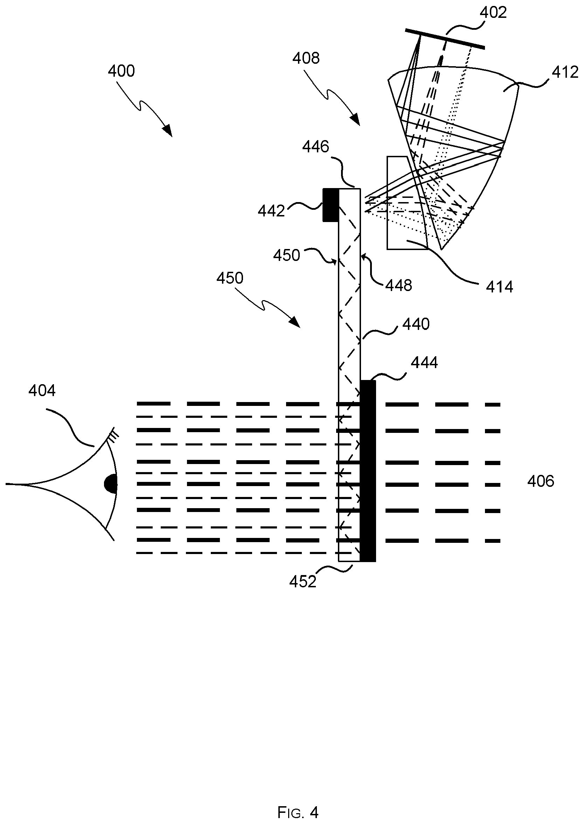

Figure 4 shows a cross-sectional view of a folded optical arrangement 400 according to an embodiment of the invention. Figure 4 shows the path of light rays through the optical arrangement 400 from an image plane 402 to a user's eye 404, and from the exterior environment 406 to the user's eye 404.

The optical arrangement 400 comprises a collimating element 408, also described as collimating optics, and a pupil expanding element 450, also described as an exit pupil expander. Light forming an image from the image plane 402 is directed towards the collimating element 408. The collimating element 408 receives the light forming the image. The light is collimated by the collimating element 408 and the collimated light is output from the collimating element 408. The collimated light is incident on the input region of the pupil expanding element or waveguide optic 450 and the pupil expanding element 450 transmits the collimated light towards the location of the user's eye 404. The pupil expanding element 450 receives the light over a first input area and effectively expands the exit pupil output from the collimating element 408 so that light leaves the pupil expanding element 450 towards the eye in use over a larger, second output area. As a result, the collimating element 408 can be reduced in size to be highly compact, by generating a small exit pupil, whilst the system still maintains a large exit pupil, via the exit pupil expanding element, which is directed towards the user's eye 404 for displaying the image. An optically absorbing element (not shown) may be placed behind the input region of the pupil expander to absorb any light not coupled into the pupil expander.

For the purposes of the figures, it will be assumed that the user's eye 404 is in the location shown, and references to the user's eye should be interpreted to mean that the typical use case is being described. However, it will be appreciated that the user's eye is not required for the invention to operate according to the principles set out herein. The optical arrangements described below ultimately generate exit pupils in the direction of an assumed position of the user's eye when the device is in use, regardless of where the user's eye actually is. Furthermore, the solid ray, dashed ray and dotted ray indicate the field of view of the optical arrangement. It should also be appreciated that the figures are illustrative, and do not show the exact ray paths through the optical arrangements.

The HMD can be of any appropriate type including goggles, glasses, a helmet or helmet visor, or in the form of a handheld device which can be brought in front of the eyes. Ideally, the device is portable or adapted to be portable by means of the support. Although not shown in detail the support may include a support adapted to support the optical elements in front of the eye. The support may include frames; side arms and supports for goggles and glasses; a helmet or visor; a headband; a neck or shoulder worn support; a gaming headset; or any other support that could be worn to hold the optical elements in the desired position.

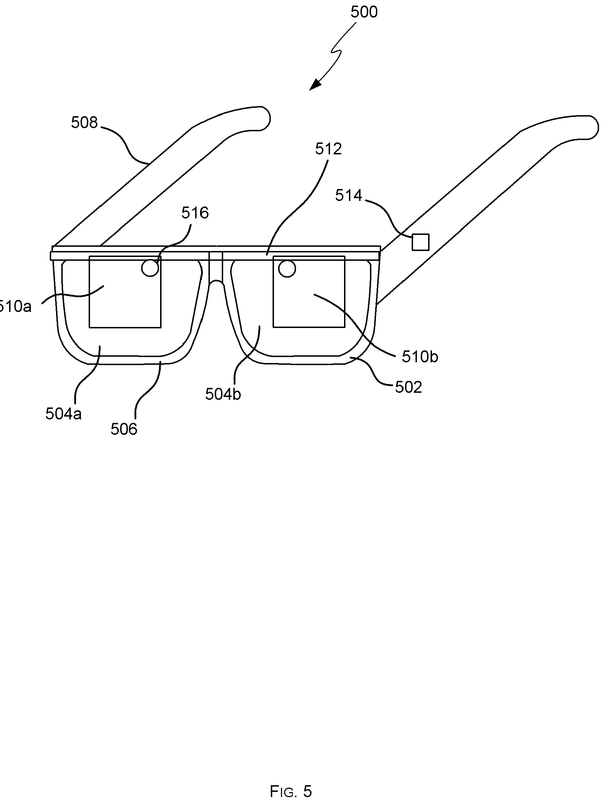

Referring to figure 5. The optical element 500 includes a frame 502 two eyepieces 504a and 504b held together by a bridging element 506. The frame is connected to two arms 508 which support the optical device on the user's head. The eyepieces each include a display element 510a and 510b which relay an image to the eye of the user in use. The display element includes, for example, a collimating element, waveguide, a lens system, a prism, or other optical components. In figure 5 the device is shown as binocular, but it is possible that the device could be monocular with one of the display media being replaced with a blank element. The optical elements may be adapted for use in the non-optical domain. It will be appreciated therefore that optical is not limited herein to mean visible optical frequencies and may include non-visible frequencies.

The two eyepieces are separated by a bridging element 506. The bridging element may be a band having a combination of a different curvature and a different length. The bridging element may have a specific shape to position or orient the eyepieces in a predetermined location. The display element may be supported on an adjustment mechanism 512, typically something like a slide rail, with user adjustment. This mechanism allows the unit to slide across the input region of the waveguide optic, therefore moving the exit pupil generated by the display system in line with the user's eye. In some cases, nonsymmetric alignment may be required to cater for non-symmetric IPDs. In addition, the display elements may be made to tilt to facilitate different fields of view (FOV) and different levels of overlapping the FOV of each eye. Other types of movement can be enabled to ensure a full range of movement to adapt the HMD to the different viewing needs of each user.

Typically, on moving, the display elements the system may become uncalibrated or otherwise optically altered in a detrimental way. In order to compensate for this the present invention includes a control system shown generally at 514 which can recalibrate or otherwise adjust various setting on the fly. A mini gyroscope 516 or equivalent monitoring device is located on each display element. This measures the exact position of the display elements relative to each other and provides an instantaneous correction of any optical aberrations brought on by moving the display element or elements.

The control system is variable depending on the use of the HMD. The control unit may be in situ or remote from the HMD. The control device may include a communications module for communicating with the optical elements and with other modules either on the HMD or remote therefrom. The communications may be wireless and/or wired. The control module may include different modules for carrying out different functions. These functions are not limited in any way but may include imaging, tracking, scene generation, processing, storage, power supply, audio etc.

In the present invention, each display element comprises a compact guide element 510a and 510b which can be used to generate the images for injection into the waveguide optics. Accordingly, the waveguide optics can all be pre-aligned and bonded into the frame in an appropriate location. This will mean that the calibration and settings of the waveguide portions of the system will be unaltered in normal use of the system.

The waveguides may be oversized, to ensure that the pupil formed by the output region of the waveguides covers an area matching that of the IPD range of the target population. In other words, the waveguide is configured to be big enough to substantially overlap the positions of the display element (at the farthest and nearest extremes) for respective IPD requirements. The compact collimating element is then designed to generate only enough exit pupil to cover an eye motion box of a single user (e.g. calculated by taking into account the pupil size and eyeball rotation corresponding to the FOV of the display and typically being in the region of 5mm diameter), thus significantly reducing the size and/or volume of the display element. The waveguide output is likely to only exceed the dimensions of the input in 1 dimension (the pupil expanding direction). The input region of the waveguide is likely to be wider than the output region.

The collimating elements can then be arranged above the waveguides, adjacent to an input region on the waveguide, and along the moveable adjustment mechanism which allows the collimating element to be moved in any required manner. For example, the collimating elements can then be adjusted along an axis in plane with the variation of IPD of a target user base. With the present invention, small collimating elements can be used with fixed and/or pre-aligned waveguide optics to be adjustable across a broad range of users thus maintaining a small optical system with large IPD coverage between users and minimising the amount of moving elements for housing within a single overall frame.

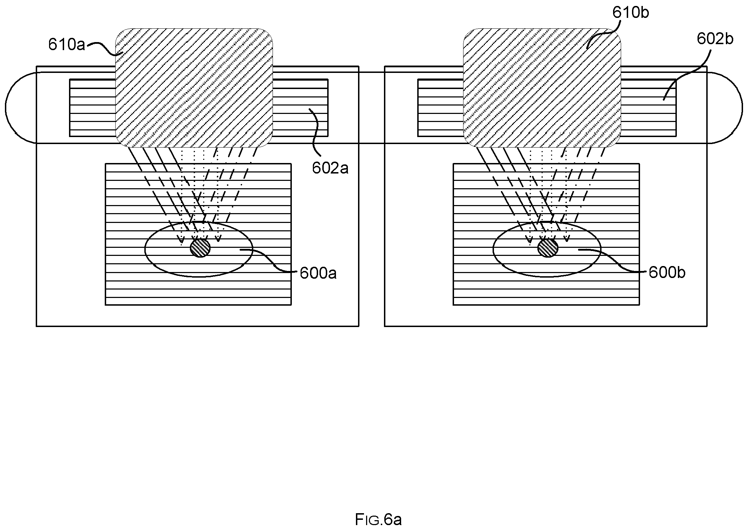

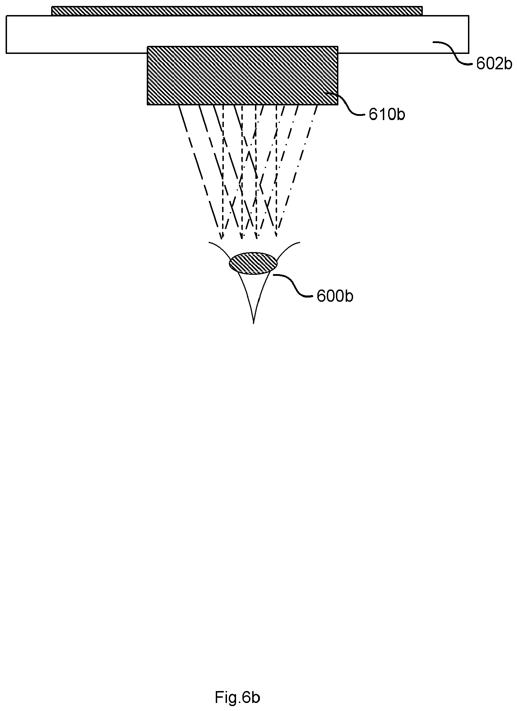

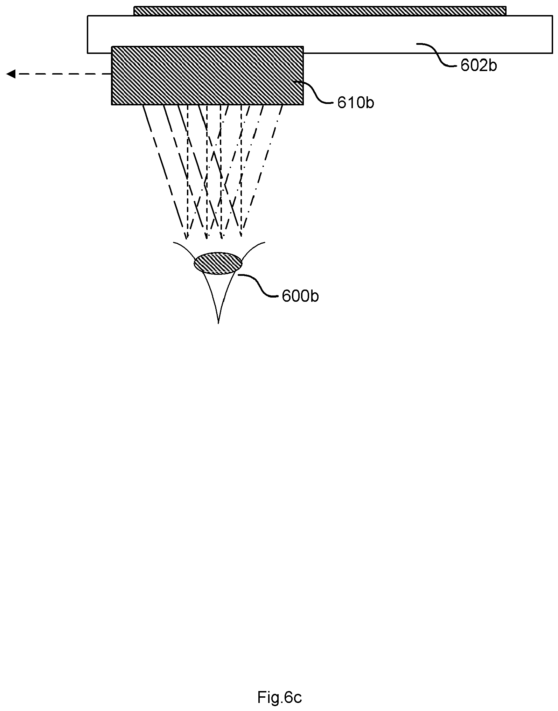

In this system the collimating elements may be paired with a flat panel display source. This optic and display panel can be arranged as a single unit, being bonded together. This unit may be separate from the waveguide element. In a binocular system, two collimating elements will be used (one per eye) arranged over the waveguide optics. The waveguide optics may comprise one waveguide (602a and (602b) per eye 600a and 600b as shown in figure 6 for respective collimating elements 610a and 610b. Figures 6b and 6c show respective top and side views for one eye 600b.

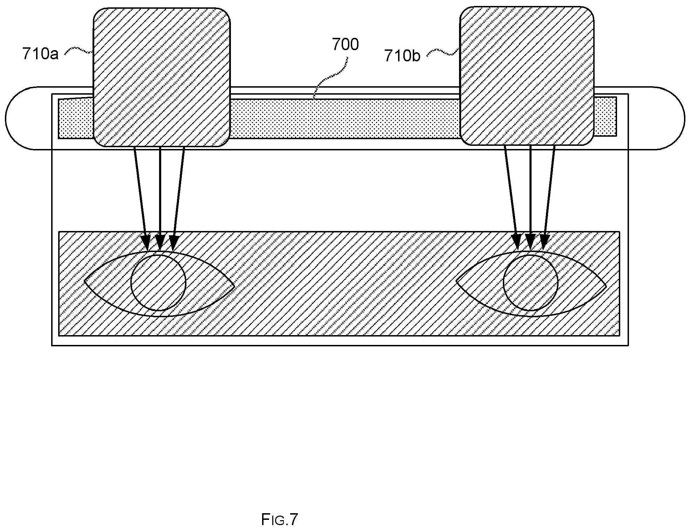

In an alternative, the waveguide optics may comprise a single waveguide 700 that is arranged to cover both eyes and used for both collimating elements 710a and 710b, as shown in figure 7. It should be noted the goal is to ensure the formation of an appropriate exit pupil output for a given FOV that it is aligned to the eye. As a result, the users eye needs to be within the exit pupil or eye motion box to see the full FOV.

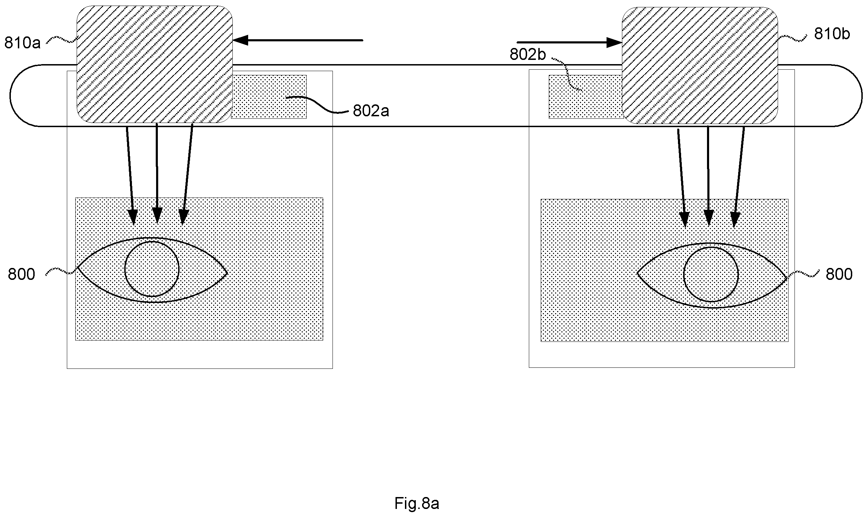

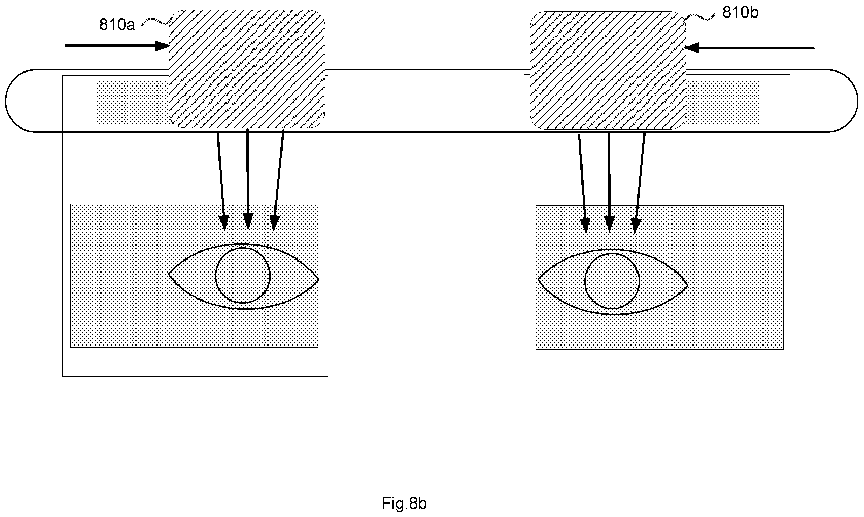

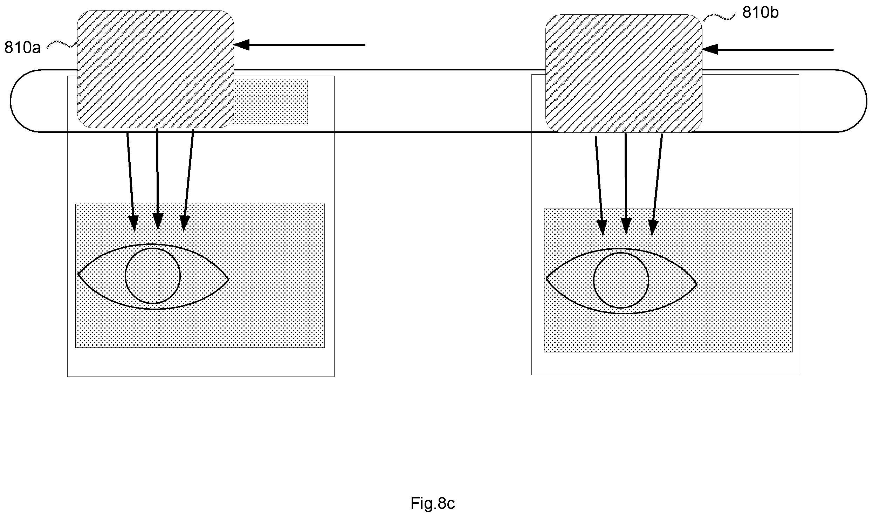

Figure 8 shows three arrangements of the collimating elements 810a and 810b arranged for different eyes 800. The collimating element may be moved by the user to the most appropriate position, examples being shown in figure 8a, 8b and 8c. In some embodiments the movement may be relative to the waveguide.

The mechanism for enabling movement of the collimating elements relative to one another can include a slider; a screw mechanism; a lever, any other mechanical mechanism or an electronic control system which automatically adjust the positions of the elements. The electronic movement system can cause the optical elements to automatically move to a required position. This could be based on a user profile or settings detected by the system to align the optical elements based on a user's eye positions or other user related or environmental conditions.

As can be seen from the different arrangements the separation of the centre of the pupil is different from one arrangement to the next. This is due to the fact that the respective users each have, for example, a different interpupillary distance (IPD). In general, IPD ranges from about 55mm to about 75mm. IPD is one anthropometric characteristic that is measured to determine where to locate eyepieces for a particular user. This is not the only anthropometric characteristic or constraint which could be used, others include: eye spacing and height, pupil size, head breadth, nose position, nose size, etc. In addition, the position of the eye of a user may be sunken, bulging or otherwise variable in natures. Occasionally, users even have eyes at different heights relative to one another or be cross-eyed. Further nose shape and width can have a significant influence. Each of the above-mentioned differences affects the required location of the active optical area for each pupil of each user. If the pupil is not correctly oriented relative to the active area portions of the display image may not be visible or visual artefacts may present themselves.

To overcome the different positions and orientations of users' pupils the present invention provides a sliding or otherwise moving collimator across the input region as shown in figure 8 that moves the exit pupil output by the waveguide in the horizontal axis (the same axis in which IPD will vary between users). Therefore, a large population of users with varying IPD are able to use the display through personalized adjustment, but the display optics remain small and compact as they are only ever generating a limited exit pupil size rather than a large exit pupil intended to cover multiple users.

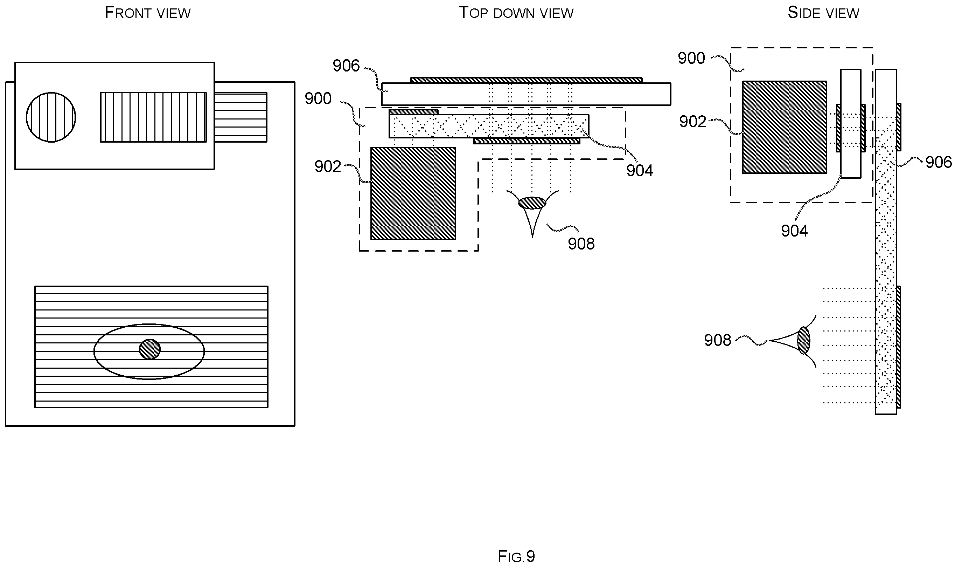

Figure 9 shows a slab configuration of an optical device of the present invention in which a 2-dimensional exit pupil expander can be used. Optical group 900 may replace the collimating element in this alternative arrangement. The optical group 900 has the same level of adjustment as discussed for the collimating element, however it includes a collimating element 902 and a horizontal pupil expander 904. The collimating element may comprise a series of lenses. The horizontal pupil expander 904 is sized to produce the required exit pupil at the eye 908 for a given eye position also referred to as an IPD setting. The horizontal pupil expander 904 further reduces the required size of the collimating element 902 when compared to previous examples and thus allows for a greater degree of freedom regarding optical layout as the collimating element 902 can be offset from the eye 908. A vertical pupil expander 906 is also provided and is operated in a similar manner to other pupil expanders described herein.

Throughout the exit pupil expanders are shown as flat or planar structures. However, they could be other shapes and sizes than those shown. For example, a curved exit pupil expander.

As previously mentioned, the collimating elements may be titled from one angular orientation to another. This has the effect that the HMD can give rise to a wider perceived field of view (FOV) than if the eyepieces were not angularly displaced. As each eyepiece is orientated off the nominal axial display path, the perceived display FOV will now comprise of a central stereoscopic region where the FOV from each eyepiece overlaps and a FOV region outside of this central region where the FOV from each eyepiece does not overlap. This will typically result in a wider binocular FOV comprising the central FOV region and FOV at the edges of the central region; this will be perceived as a wider FOV by the user.

The present invention is aiming to provide a flexible and adjustable HMD which can be adapted for use with different users by a combination of user adjustment of the collimating elements and optical compensation via the control system.

The optical compensation provided by the control system will now be described. The control system will provide data used to alter the image generated on the display device for each eye. In the case of stereoscopic displays, the users IPD is required to render stereoscopic images which accurately correspond to apparent image depths in the real world. Tracking the position of the collimating optics could be measured (for example by using a miniature gyroscope or some other positional measurement device). Once an adjustment has been made to account for a new users IPD can then be used in the generation of the images. Angular offset in the position of the collimating optics either due to intentional offset (i.e. to create a larger FOV), or due to mechanical tolerance in the adjustment mechanism, could also be measured using for example the miniature gyroscope. The measured offset data can then be used by the control system to calculate an adjustment required to the generated images in order to maintain the alignment of images to be presented to the left and right eyes of the user. This would help to ensure display accuracy and reduce user eye strain.

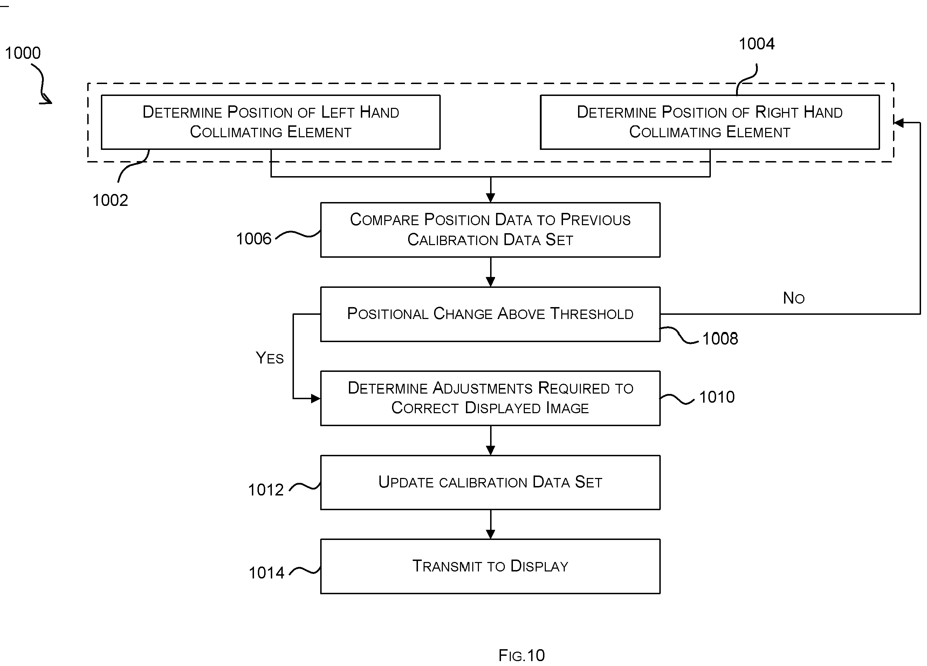

Figure 10 shows an example of a simple flow diagram 1000 which demonstrates the steps carried out by the control system in use. In a first instance the position of the left-and right-hand collimating elements is determined 1002, 1004. In step 1006, the position of each collimating element is compared to previous calibration data, if available. If this is a first time use for a user, calibration data may be collected based on the user preferences, eye positions, etc. In step 1008 if the comparison identifies a positional change over a predetermined threshold (yes), the process continues. If not, the process returns to identifying the position of the collimating elements anew. If yes at step 1010, the control system determines an adjustment required for the displayed image. At step 1012 the calibration data is updated to reflect the new adjustments. The image is then transmitted to the display at step 1014.

The adjustments made to the optical device can be made by the user based on data supplied by the control system. As an alternative, the eyepieces may be moved automatically by use of a motor or other appropriate device associated with the optical device. In some situations, known user profiles could be stored such that the optical device automatically adjusts based on a user profile.

The present invention provides a number of clear advantages, example of which are now discussed.

An HMD is a relatively expensive piece of equipment and as such it is undesirable to have more than are needed. By providing an adaptable system in accordance with present invention a single HMD is easily adaptable to all users without having to have a device for each user. In addition, as the configuration is adapted to the IPD of each user by moving a relatively small collimating element to a required position thereby reducing the size and weight of the optics.

As will be appreciated the present invention relates to an adjustable wearable optic device such as an HMD. It could equally apply to different devices, including but not limited to HWD and other optical devices.

By way of example this technique could be applied to heads up displays (HUDs) as part of a pupil steering system. In this case the adjustment mechanism would be associated with the optical device and allow movement of optical elements to align with the user presences. The overall system for achieving pupil steering in the HUD is likely to be more complex as the users' head can move in relation the waveguide and optics device and may need to include pupil tracking systems to ensure correct alignment.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term 'comprising' does not exclude the presence of other elements or steps.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an', 'first', 'second', etc. do not preclude a plurality. In the claims, the term 'comprising' or "including" does not exclude the presence of other elements.

## Claims

1. A wearable optics device configured to support one or more waveguides in a pre-aligned position relative to the optical device, the optics device including:
an adjustment mechanism supportable on a frame adapted to be worn by a user;
an optical element moveably attached to the adjustment mechanism to enable the optical element to be moved based on a user preference and to provide an exit pupil for the wearable optics device.

2. The wearable optics device of claim 1, further comprising one or more waveguides in the pre-aligned position relative to the adjustment mechanism of the optics device.

3. The wearable optics device of claim 2, wherein the one or more waveguides comprise two sections, one for each eye.

4. The wearable device of claim 2 or claim 3, wherein the waveguide is larger than the input of the optical element.

5. The wearable optics device of any preceding claim, wherein the optical element comprises two optical elements one for each eye of the user.

6. The wearable optics device of any preceding claim, further comprising a control system providing optical compensation to the optical element caused by the movement thereof.

7. The wearable optics device of any preceding claim, wherein the optical element is a collimating element.

8. The wearable optics device of claim 7, wherein the collimating element includes a display.

9. The wearable optics device of any preceding claim, wherein the optical element is adapted to be move in a horizontal direction to adapt to interpupillary distance of the user.

10. The wearable optics device of any preceding claim, wherein the optical element is adapted to be angularly displaceable to create a wider field of view for display.

11. The wearable optics device of any preceding claim, wherein the adjustment mechanism comprises a slider on which the optical element is moveably attached.

12. The wearable optics device of any preceding claim, wherein the adjustment mechanism comprises a tilting mechanism for changing the angular position of the optical element.

13. The wearable optics device of any preceding claim in the form of at least one of a head mounted display and a head worn display.

14. An optical element for use with the wearable optics device of any preceding claim.

15. A method of adjusting an image on a wearable optics device according to any one of claims 1 to 13 comprising:
determining the position of each of a left- and right-hand collimating element of the wearable optical device;
compare the position with calibration data associated with a user of the wearable optics device;
determine adjustments to be made based on the comparison;
adjust the positions of the left- and right-hand collimating element based on a comparison to provide an exit pupil for the wearable optics device.
